# EUROPÄISCHE PATENTSCHRIFT

(11) **EP 2 212 608 B1**
(45) Veröffentlichungstag und Bekanntmachung des Hinweises auf die Patenterteilung: **23.05.2012**
(21) Anmeldenummer: 08840853.9
(22) Anmeldetag: 14.10.2008
(51) Int. Cl.: F16L 37/373, F16L 55/10

(54) **Kupplungsvorrichtung zum dichtenden Verbinden von flüssige oder gasförmige Medien transportierenden Leitungen**
Coupling apparatus for the sealing connection of lines which transport liquid or gaseous media
Dispositif de raccordement pour le raccord étanche de conduites transportant des milieux liquides ou gazeux

(30) Priorität: 18.10.2007 DE 102007050370
(43) Veröffentlichungstag der Anmeldung: 04.08.2010
(73) Patentinhaber: Roman Seliger GmbH, 22848 Norderstedt (DE)
(72) Erfinder: HAMKENS, Hauke-Peter, 25832 Tönning (DE); BRANDT, Holger, 22869 Schenefeld (DE); SCHWARZ, Eugen, 21033 Hamburg (DE); ADAM, Michael, 24589 Nortorf (DE); BUHK, Birger, 21039 Hamburg (DE)
(74) Vertreter: Stork Bamberger
(86) Internationale Anmeldenummer: PCT/EP2008/008854
(87) Internationale Veröffentlichungsnummer: WO 2009/053011

(56) Entgegenhaltungen:
- WO-A-99/34144
- DE-A1- 10 354 974
- DE-A1-102005 011 601
- GB-A- 2 391 051
- US-A- 3 921 656
- US-A- 5 090 448
- US-A- 5 351 708

## Beschreibung

Die Erfindung betrifft eine Kupplungsvorrichtung zum dichtenden Verbinden von flüssige oder gasförmige Medien transportierenden Leitungen, umfassend zwei entsprechende Kupplungsteile mit geraden Achsen, die an ihren Kupplungsöffnungen mittels Verbindungseinrichtung in gerader Kupplungsachse aneinanderfügbar sind und jeweils ein einen Durchströmungsraum umgebendes Kupplungsgehäuse mit Leitungsanschlusselement sowie eine Ventilelement und zugehörige Ventilaufnahme aufweisende Ventileinrichtung zum Sperren und Freigeben des Medienflusses durch den Durchströmungsraum aufweisen, wobei die Ventileinrichtungen der beiden Kupplungsteile zum selbsttätigen Zusammenwirken beim Kuppeln und Entkuppeln der Kupplungsteile mit jeweils zwischen Kupplungsgehäuse und Ventileinrichtung geschalteter Druckkraftquelle derart eingerichtet sind, dass die Ventileinrichtungen im gekuppelten Zustand der Kupplungsteile geöffnet und im entkuppelten Zustand der Kupplungsteile geschlossen sind.

Jede Ventileinrichtung ist mit einer Schiebeeinrichtung ausgebildet die die zugehörige Ventilaufnahme in dem Kupplungsgehäuse längs der geraden Kupplungsachse unter in Richtung der Kupplungsöffnung wirkender Druckkraft der Druckkraftquelle translatorisch bewegbar lagert. Das Ventilelement ist zusammen mit der Ventilaufnahme translatorisch verlagerbar und mittels einer an dem Ventilelement angeordnete Axialzapfen umfassenden Drehlagerung derart drehbar gelagert ist, dass es zwischen einer die Ventileinrichtung schließenden Schließposition und einer sie öffnenden Öffnungsposition um eine die Kupplungsteilachse quer kreuzende Drehlagerachse hin und her drehbar ist. Jeder Kupplungsteil ist mit einer Zwangsführungseinrichtung ausgestattet, die die unter Wirkung der Druckkraftquelle erfolgende translatorische Bewegung der Ventilaufnahme in die zwischen Schließ- und Öffnungsposition erfolgende rotatorische Bewegung des Ventilelements zum Betrieb der Kupplungsvorrichtung im entkuppelten bzw. gekuppelten Zustand umsetzt. Die Kupplungsvorrichtung wird üblicherweise als Sicherheits- oder Nottrennkupplung eingerichtet. Beim Öffnen der Kupplung werden die Ventilelemente mittels der Druckkraftquellen selbsttätig angetrieben, um die Ventileinrichtungen zu schließen und infolgedessen jedes Kupplungsteil für den Durchfluss von Medium zu sperren. Umgekehrt werden die Ventileinrichtungen selbsttätig geöffnet, wenn die Kupplungsteile zum Herstellen einer Leitungsverbindung aneinandergefügt werden.

Eine gattungsgemäße Kupplungsvorrichtung ist aus DE-A1-103 54 974 bekannt. Dort weist eine Zwangsführungseinrichtung ein Nockenprofilloch auf, das sich in einem drehbaren Ventilelement erstreckt, sowie einen mit dem Nockenprofilloch zusammenarbeitenden Stift. Das Nockenprofilloch beeinträchtigt die Gestaltung des Ventilelements, und dem Stift zugeordnete weitere Führungslöcher schränken Dichtanlage und Durchströmungsraum ein.

Aus DE-A1-10 2005 011 601 ist eine Kupplung mit pilzförmigen, Schraubenfedern zentral lagernden Ventilen bekannt, die die Strömung durch die Kupplungsvorrichtung mehrfach mit beträchtlicher Radialablenkung umlenken. Der Durchströmungsraum ist durch Bauelemente, die sich radial und speichenartig erstrecken, eingeengt. Erhebliche Strömungsverluste sind die Folge. Die Kupplungen bauen relativ raumaufwendig. Größerer Bauraum ist mit größerem Gewicht für die Kupplungsarmatur verbunden.

Aus GB-A-2 391 051 ist eine raum- und konstruktionsaufwendige Abreißkupplung mit Klappenventilen bekannt. Um den Durchströmungsraum störungsfrei auszubilden, werden Kupplungshälften mittels eines zusätzlichen, in sie eingreifenden Rohres verbunden. Öffnen und Schließen der Kupplungsvorrichtung erfordern das Handhaben des Verbindungsrohres. Beim zeitversetzten Öffnen der Kupplungshälften fallen erhebliche Restmengen an. Die Klappenventile werden mit Drehfedern angetrieben, die nicht geeignet sind, einen ausreichend wirksamen Dichtsitz an axialen Ventilsitzen herzustellen. Andere bekannte Kupplungen sind mit gegen axiale Ventilsitze arbeitenden Klappenventilen ausgestattet, deren Lagerung mit Drehfeder innerhalb des Durchströmungsraums angeordnet ist. Entsprechende Konstruktionen finden sich auch bei sogenannten Butterfly-Ventilklappen (z. B. WO-99/34144). Sämtlichen Konstruktionen mit Drehfeder-belasteten Klappenventilen ist eigen, dass nach Trennung der Kupplung aufwendige Maßnahmen unter Verwendung von Hilfswerkzeug erforderlich sind, um die Klappenventile zum Verbinden der Kupplungshälften in ihre geöffneten Positionen zu bringen. In Axialrichtung arbeitende Dicht- und Sitzränder bekannter Ventile wirken wie Flachdichtungen mit insbesondere bei niedrigem Leitungsdruck unzulänglicher Dichtwirkung. Die Schließgeschwindigkeit der Ventile bleibt häufig unbefriedigend. Ventilelemente, deren Dichtränder sich im Durchströmungsraum befinden, sind einer Schädigung durch abrassive Medien ausgesetzt.

Aus US 3 921 656 ist eine Abreißkupplung mit selbstschließenden Ventileinrichtungen bekannt, die Kugelventile mit Durchströmungsbohrungen aufweisen. Zum Aufrechterhalten der Ventilöffnungsstellung müssen die Ventilkugeln gegen die Kraft relativ schwacher Drehfedern aneinander arretiert werden. Zum Herbeiführen der Ventilöffnungsstellung ist Hilfswerkzeug erforderlich, das von außen an die Kupplung angesetzt werden muss.

Demgegenüber liegen der Erfindung die Ziele zugrunde, die Kupplungsvorrichtung unter Vermeidung der genannten Funktionseinschränkungen und Konstruktionsbeeinträchtigungen zu verbessern. Erfindungsgemäß sollen insbesondere eine weitgehend verbesserte Durchströmung sowie eine einfache Instandsetzung der Kupplungsvorrichtung insbesondere nach einer Nottrennung erreicht werden. Auch soll es möglich sein, die Kupplungsvorrichtung mit relativ geringem Gewicht und kleinbauend auszuführen. Zudem soll eine zufriedenstellende Anwendung der Kupplung zum Verbinden von Leitungen, die abrassive Medien fördern, eröffnet sein.

Erfindungsgemäße Ziele werden in Verbindung mit den Merkmalen der Kupplungsvorrichtung der eingangs genannten Art dadurch erreicht, dass die Zwangsführungseinrichtung eine an der Drehlagerung und dem Kupplungsgehäuse ausgebildete Exzentersteuerung mit Exzenterschreiben aufweist, mit denen die Axialzapfen des Ventilelements verbunden sind.

Mit der erfindungsgemäßen Kupplungsvorrichtung wird eine ganze Reihe von Vorteilen erreicht. Mit der Schiebekonstruktion in Verbindung mit der erfindungsgemäßen Zwangsführungseinrichtung erreicht man, dass die Kupplungsteile zum Herstellen der Kupplungsverbindung mit geöffneten Ventileinrichtungen an ihren einander zugewandten Kupplungsöffnungen nur gegeneinander gesetzt werden müssen. Die Ventileinrichtungen sind aufgrund der erfindungsgemäßen Drehlagerung der Ventilelemente mit größtmöglichen Durchströmungsräumen ausgebildet. Während die Zwangsführung dafür sorgt, dass die Ventile beim Zusammenfügen und Trennen der Kupplung zeitgleich selbsttätig in ihre Positionen gebracht werden, werden zugleich mit der Drehung der Ventilelemente einerseits optimale Öffnungsquerschnitte und Strömungsverhältnisse und andererseits besonders wirksame Abdichtungen erreicht. Die Zwangsführung ist derart, dass das Ventilelement zusammen mit der Ventilaufnahme mittels der Schiebeeinrichtung in Richtung der Kupplungsachse mit erheblicher Druckkraft beaufschlagt wird, so dass der Mechanismus besonders zuverlässig und wirksam ist. Man erreicht insbesondere große Schließgeschwindigkeit der Ventile. Das erfindungsgemäße Zwangsführungsgetriebe, das zeitgleich die Axialbewegung der Ventilaufnahme sowie die Rotationsbewegung des Ventilelements ausführt, erlaubt kleinbauende Ausfiihrung und Anordnung der Bauelemente. Die auf die Schiebeeinrichtung wirkende axiale Druckkraftquelle ist außerhalb des zentralen Bereichs des Durchströmungsraumes angeordnet.

Mit Hilfe der erfindungsgeäßen Exzenteransteuerung lassen sich die Ventilelemente besonders wirksam, einfach und präzise mit einem Drehwinkel von 90° hin und her schalten, um den Durchgang im Strömungsraum zu schließen bzw. zu öffnen. Zweckmäßig ist jedes Ventilelement mit an beiden Achsenenden drehfesten Exzenterelementen verbunden, die jeweils in einer Kurvenbahn am Kupplungsgehäuse ruhen. Man erreicht damit auch eine relativ kleine translatorische Versatzbewegung der Ventileinrichtung zum Schließen und Öffnen der Ventile.

Erfindungsgemäß ist das Ventilelement jeder Ventileinrichtung als drehbarer Körper ausgebildet und gelagert. Zum Ausbilden einer radialen Dichtung weist das Ventilelement einen sphärischen Umfangsabschnitt zum Einfassen in einen komplementären Abschnitt der Ventilaufnahme auf. Die radiale Abdichtung weist gegenüber axialer Abdichtung deutliche Vorteile auf. So wird eine axiale Abdichtung im Wesentlichen durch die Wirkung von Federkraft sowie von Innen- und Außendruck des durchströmenden Mediums auf das Ventilelement bestimmt. Axiale Dichtungen neigen zur Leckage. Eine radiale Abdichtung wird hingegen wesentlich durch die Geometrie des Ventilelements in der Ventilaufnahme bestimmt. Dies ist insbesondere bei sehr niedrigen Drücken von großer Bedeutung.

Die erfindungsgemäß als drehbare Körper ausgebildeten und gelagerten Ventilelemente lassen sich einfach mit einer Geometrie ausbilden, die einerseits den Strömungsquerschnitt bestimmt und optimiert und andererseits für eine besonders wirksame, von Axialkraft entlastete Abdichtung sorgt. Besonders vorteilhaft kann daher der Strömungsquerschnitt des Durchströmungsraums längs der Kupplungsteilachse zumindest im Wesentlichen gleich dem Strömungsquerschnitt der an die Kupplungsvorrichtung anschließbaren Leitungen sein. Eine Gestaltung besteht darin, dass der Strömungsquerschnitt des Durchströmungsraums längs der Kupplungsteilachse zumindest im Wesentlichen mit einem einheitlichen Strömungsquerschnitt der Ventilaufnahme übereinstimmt.

Eine besonders bevorzugte Ausgestaltung der Erfindung besteht darin, dass das Ventilelement als kreisförmige Ventilscheibe mit konvexem, vorzugsweise sphärisch geformtem Dichtrand ausgebildet ist und dass die Ventilaufnahme durch einen den Durchströmungsraum wenigstens über den Großteil seiner Länge begrenzenden geraden Leitungsabschnitt vorzugsweise in Form eines geraden Rohrstücks ausgebildet ist, dessen Innenwandung einen Strömungskreisquerschnitt bestimmt und einen umlaufenden, dem Scheibendichtrand zugeordnete Ventilsitz zur Ausbildung einer Radialabdichtung aufweist, wobei die Ventilscheibe ein Klappenelement bildet, das den Strömungskreisquerschnitt in der durch die Radialabdichtung hergestellten Ventilschließposition schließt und in der Ventilöffnungsposition eine in der Kupplungsteilachse ausgerichtete Position einnimmt.

Die Ventilscheibe ist eine flache kreisförmige Klappe, die in der Ausrichtung mit der Kupplungsteilachse, dass heißt in geöffneter Ventilposition, eine optimale Durchströmungscharakteristik durch ungestörte hälftige Bereiche des Durchströmungsraums bewirkt. Eine besondere bevorzugte erfindungsgemäße Maßnahme besteht darin, dass der Durchströmungsraum mittels einer die gleichmäßige Längsdurchströmung begünstigenden Strömungswand in zwei Halbräume unterteilt wird. Zu diesem Zweck wird die Ventilaufnahme mit einem Ventilhalter ausgestattet, der Bestandteil einer sich in dem geraden Leitungsabschnitt axial erstreckenden Diagonalwand ist. Diese ist als flache, die Axialströmung durch den Durchströmungsraum begünstigende Durchströmungswand ausgebildet und weist einen die Ventilscheibe in ihrer zur Kupplungsteilachse parallelen Ventilöffnungsposition aufnehmenden Halterraum auf. Infolgedessen wird die Strömung durch eine Art Strömungsschwert symmetrisch aufgeteilt. Der durch die Strömungswand geteilte Strömungsraum bleibt frei von Bauteilen für die Kinematik zum Lagern und Antrieb des drehbaren Ventilelements.

Zweckmäßig wird der Ventilhalter an seinen freien Endrändern mit axiale An-und Abströmung begünstigenden, vorzugsweise spitz zulaufenden Strömungsflächen ausgebildet, um gezielt in Axialrichtung wirkende An- und Abströmkannten einzurichten. Mit dem Halterraum ist eine Halteröffnung gebildet, in der die Ventilklappe in geöffneter Ventilposition ruht. Zweckmäßig wird der Halterraum mit einem Öffnungslagerrand ausgebildet, der an den vorzugsweise sphärischen Ventilscheibenrand zur abdichtenden Aufnahme der Ventilscheibe in der Strömungswand angepasst ist. So lässt sich die Ventilscheibe mit ihrem Ventilscheibenrand vollständig in dem Halterraum aufnehmen und die Strömungswand des Ventilhalters glattflächig schließen. Der Ventilscheibenrand bleibt in besonderem Maße gegen abrassive Medien in seiner in der Strömungswand versenkten Stellung geschützt. Dies erweitert die Einsatzmöglichkeiten der erfindungsgemäßen Kupplungseinrichtung erheblich.

Eine andere erfindungsgemäße Ausgestaltung besteht darin, dass das Ventilelement als Ventilkugel ausgebildet und die Ventilaufnahme mit die Ventilkugel lagernden Lagerflächen ausgestattet wird. Hier macht man sich die Eigenschaften von Kupplungsventileinrichtungen mit Kugeln zu nutze. Letztere sind entsprechend dem gewünschten an den Leitungsquerschnitt der zu verbindenden Leitungen angepassten Querschnitt durchbohrt. Die erfindungsgemäße axial-translatorische und rotatorische Lagerung des Ventilelements in Kombination mit der Zwangsführung erlaubt es, die Ventilelemente in Form der Ventilkugeln mit den Strömungsdurchbohrungen auszubilden. Beim Schließen und Öffnen der Kupplungsvorrichtung kommt die mit den erfindungsgemäßen Maßnahmen erreichte Kinematik der Einrichtung zur Geltung. Damit sind die wesentlichen Vorteile des einfachen Instandsetzens der Kupplungsarmatur nach einer Trennung, des unter axialer Druckkraft besonders wirksamen und zuverlässigen Antriebs, des zuverlässigen Schließens der Ventile mit hoher Geschwindigkeit sowie der optimalen Durchströmung erreicht.

Vorteilhaft wird die Schiebeeinrichtung, um sie in Verbindung mit der Zwangsführungseinrichtung zu betreiben, längs der Kupplungsteilsachse mit einer Linearführung eingerichtet, die an der Ventilaufnahme und dem Kupplungsgehäuse ausgebildet ist.

In bevorzugter Gestaltung wird die Druckkraftquelle durch eine axial ausgerichtete Druckfeder gebildet, die an dem zum Leitungsanschluss ausgebildeten Ende des Kupplungsteils zwischen dem Kupplungsgehäuse und der verlagerbaren Ventilaufnahme in mit der Kupplungsteilachse koaxialer Anordnung eingerichtet ist. In dieser Anordnung weist die Druckfeder wenigstens den Durchmesser des Durchströmungsraums bzw. einer Durchströmungsleitung auf. Sie kann mit relativ wenigen Windungen stark dimensioniert werden, um erhebliche Axialkraft auf den Betrieb der linearen Schiebeeinrichtung und der Zwangsfiihrungseinrichtung auszuüben.

Die Verbindungseinrichtung der erfindungsgemäßen Kupplungseinrichtung kann in jeder gewünschten Form ausgeführt werden. Dies wird insbesondere dadurch erreicht, dass die die beiden Kupplungshälften bildenden Kupplungsteile der Kupplungsvorrichtung an ihrer Außenseite von Elementen der erfindungsgemäßen Lagerung und Ventilantriebssteuerung frei bleiben. Kupplungsränder oder Flansche an den einander zugewandten freien Kupplungsöffnungen oder -rändern lassen sich daher ohne konstruktive Einschränkungen gestalten und vorteilhaft als Modulbauteile ausführen sowie je nach Einsatzzweck anwenden. Gemäß besonderem Zweck lässt sich die Kupplungseinrichtung als Sicherheits- oder Nottrennkupplung mit einer Verbindungseinrichtung ausbilden, die eine Kupplungslöseeinrichtung aufweist, die mit einem Lösemittel ausgestattet ist, das bei vorgegebener Beanspruchung der Kupplungsvorrichtung die Verbindungseinrichtung zum Trennen der Kupplungsteile selbsttätig öffnet. Unter Nutzung der erfindungsgemäßen Kupplungsvorrichtung lässt sich die Verbindungseinrichtung daher mit einem Satz von unterschiedlichen, jedoch jeweils zum Zusammenfügen der beiden Kupplungsteile an diese angepassten Anschlusshülsen ausstatten, die jeweils mit einem besonderen Lösemittel eingerichtet werden. Der modulare Anbau von Verbindungs-/Auslöseteilen erlaubt die Verwendung der Kupplungseinrichtung für unterschiedliche Einsatzbereiche. Auslöseteile des Lösemittels können zum Beispiel definiert brechende Teile wie Bruchbolzen sein. Die Anschlusshülsen können auch für Stift-, Spann- und/oder Klemmteile oder dergleichen Teile ausgebildet sein, die sich mittels eines gespannten Seilzuges in vorbestimmter Weise abtrennen und/oder öffnen lassen.

Unteransprüche sind auf die genannten und noch andere zweckmäßige und vorteilhafte Ausgestaltungen der Erfindung gerichtet. Besonders zweckmäßige und vorteilhafte Ausführungsformen und -möglichkeiten der Erfindung werden anhand der folgenden Beschreibung der in der schematischen Zeichnung dargestellten Ausführungsbeispiele näher beschrieben. Es zeigen:
- Fig. 1 und 2: in axonometrischer Ansicht und fliegender Darstellung eine in Baugruppen unterteilte erfindungsgemäße Kupplungsvorrichtung mit einer ersten Bruchbolzeneinrichtung in gekuppeltem bzw. entkuppeltem Zustand,
- Fig. 3A und 3B: Details zu Fig. 1 und 2,
- Fig. 4A und 4B: im Längs- und Radialquerschnitt Ansichten einer erfindungsgemäßen Kupplungsvorrichtung gemäß Fig. 1 und 2 in gekuppeltem Zustand mit geöffneten Ventileinrichtungen,
- Fig. 5: im Längsschnitt eine Ansicht der Kupplungsvorrichtung gemäß F-F in Fig. 4,
- Fig. 6A und 6B: im Längs- und Radialquerschnitt Ansichten der Kupplungsvorrichtung gemäß Fig. 1 und 2 im entkuppelten Zustand mit geschlossenen Ventileinrichtungen,
- Fig. 7A und 7B: im Teillängsquerschnitt eine andere erfindungsgemäße Kupplungsvorrichtung im gekuppelten bzw. entkuppelten Zustand mit Kugelventileinrichtungen,
- Fig. 8A und 8B: im Längs- und Radialquerschnitt Ansichten einer erfindungsgemäßen Kupplungsvorrichtung im zusammengefügten Zustand mit einer weiteren Bruchbolzeneinrichtung und
- Fig. 9A und 9B: im Längs- und Radialquerschnitt Ansichten einer erfindungsgemäßen Kupplungsvorrichtung mit einer Klammer- und Seilzugeinrichtung.

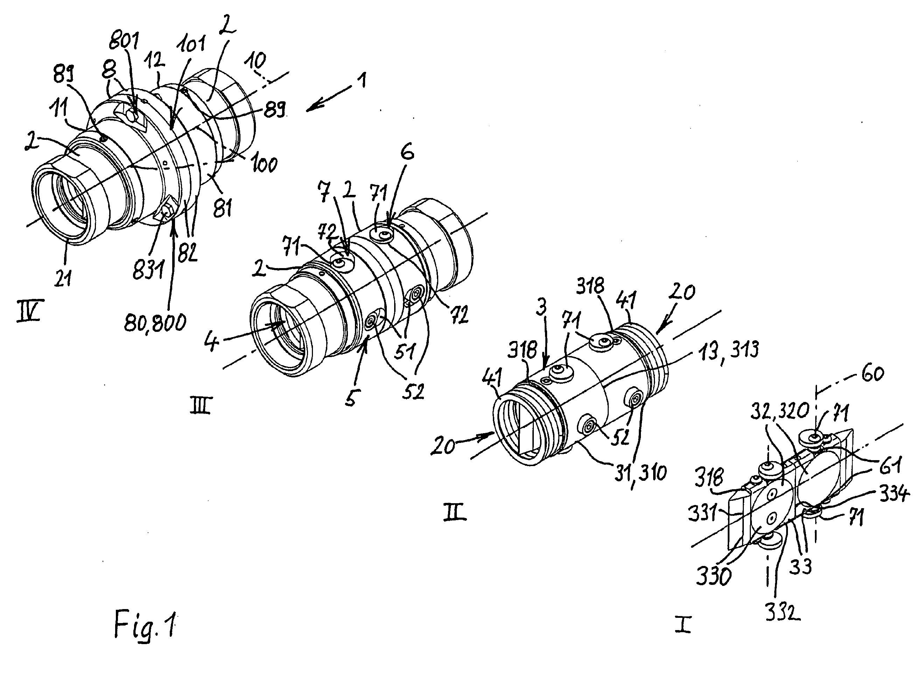

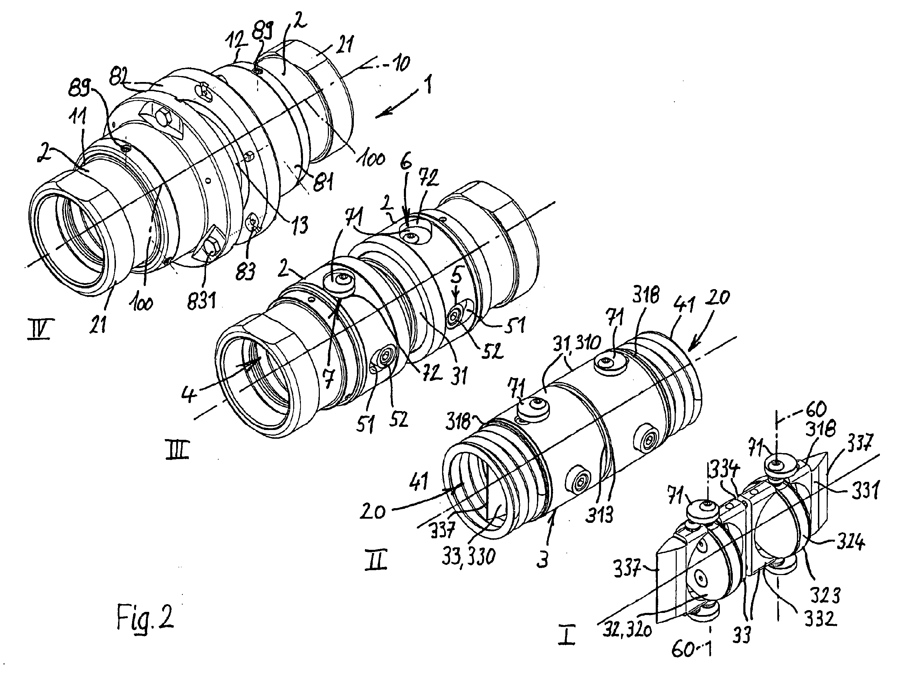

Eine in Fig. 1 und 2 im Ausführungsbeispiel dargestellte erfindungsgemäße Kupplungsvorrichtung 1 setzt sich im Wesentlichen aus vier Baugruppen zusammen, die in Phasen des Zusammenbaus zu sehen sind. Kupplungsteile 11, 12, die in Fig. 1 aneinandergekuppelt und in Fig. 2 - noch in gerader Kupplungsachse 10 befindlich - unmittelbar nach Trennen bzw. Entkuppeln dargestellt sind, sind als übereinstimmende, zumindest im Wesentlichen einander entsprechende Kupplungshälften ausgebildet. Soweit es nicht auf die Gesamtdarstellung der Kupplungsvorrichtung ankommt, wird daher im Folgenden eine der beiden Kupplungshälften beschrieben, deren übereinstimmende Teile mit gleichen Bezugszeichen versehen sind. Die Kupplungsteile 11, 12 weisen jeweils eine gerade Leitungsachse 100 auf. Gehäuse 2 und Ventilaufnahmen 31 sind zylindrische Teile mit Kreisquerschnitten.

Eine innere Baugruppe weist eine Strömungswand 330 auf, in der eine ein Ventilelement 32 bildende kreisförmige Ventilscheibe 320 einer Ventileinrichtung 3 in Drehanordnung aufgenommen ist. In der Gruppe II ist die Ventilaufnahme 31 zu sehen, die als gerades kreiszylindrisches Rohrstück 310 mit Kreisquerschnitt ausgebildet ist. In der Ventilaufnahme 31 ist die Strömungswand 330 als Diagonalwand eingefügt, die die Ventilaufnahme 31 längs der Kupplungsteilachse 100 symmetriegleich in zwei Halbräume unterteilt. Die beiden Halbräume bilden einen linearen Durchströmungsraum 20. Die Ventilaufnahme 31 bildet an einem Ende eine Leitungs-Kupplungsöffnung 13. Wenn die Kupplungshälften aneinandergekuppelt sind (Fig. 1), stoßen die Kupplungsöffnungen 13 mit ihren Öffnungsrändern 313 in einer Anschlusskupplungsebene 101 dichtend aneinander. Zudem sitzen dann Ränder 334 der beiden Strömungswände 330 in dieser Ebene 101 auf Stoß gegeneinander. Der Rand 318 am anderen Ende der Ventilaufnahme 31 ist gegen eine koaxial in dem Kupplungsteil 11, 12 angeordnete Druckschraubenfeder 41 einer Druckkrafteinrichtung 4 gesetzt.

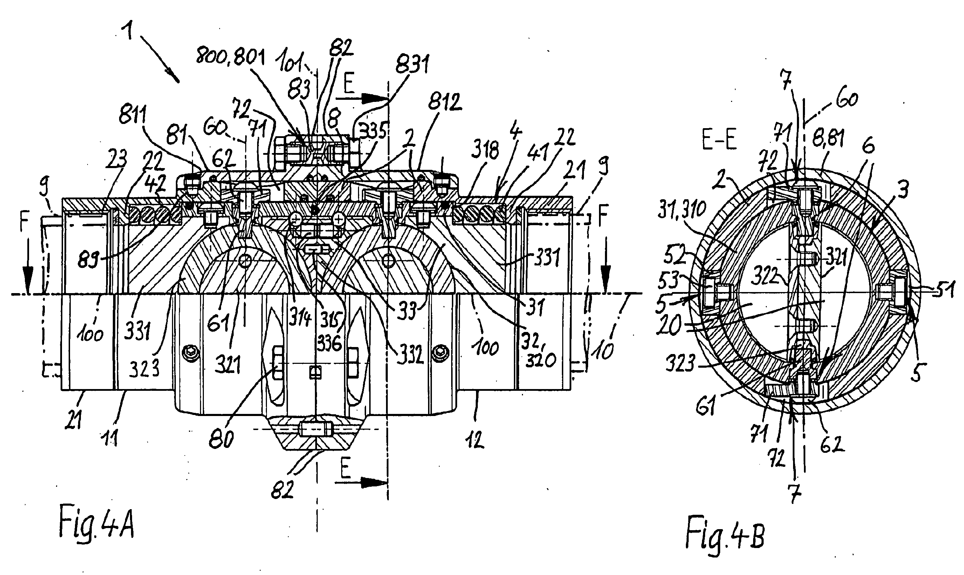

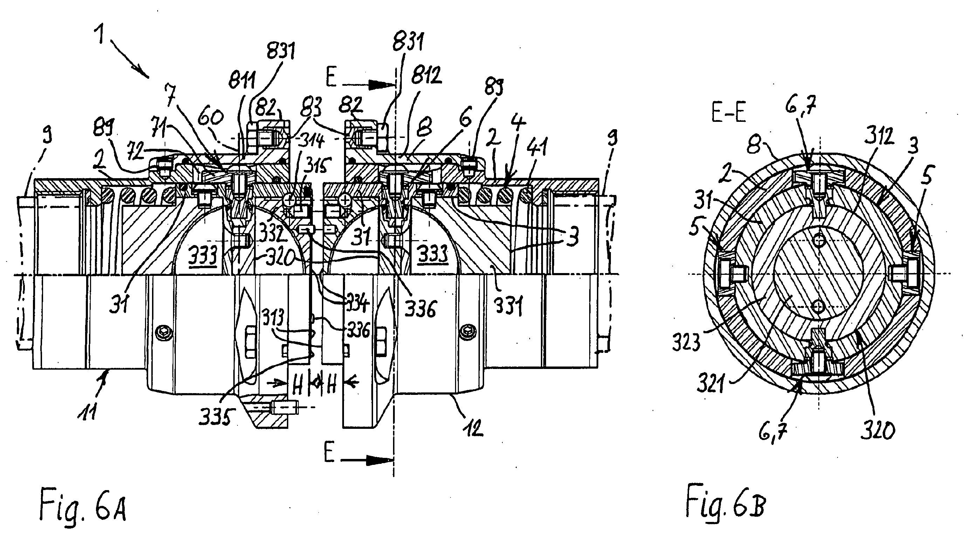

In der Gruppe III wird die Anordnung und Einrichtung gemäß Gruppe II in einem Kupplungsgehäuse 2 aufgenommen. Dieses weist ein übliches Leitungsanschlusselement 21 mit Innengewinde zum Anschluss einer in Fig. 4A, 6A strichpunktiert dargestellten, Medium führenden Leitung 9 auf. Unter einer anschließbaren Leitung wird, soweit eine solche Verbindung herzustellen ist, auch ein Leitungsteil oder ein äußeres Anschlussstück verstanden.

In der Gruppe IV ist die Kupplungsvorrichtung 1 durch eine Verbindungseinrichtung 8 vervollständigt. Diese umfasst zwei jeweils an dem Kupplungsteil 11, 12 angeordnete Anschluss- oder Flanschhülsen 81, die im gekuppelten Zustand der Vorrichtung 1 mit Flanschrändern 82 gegeneinander sitzen. Diese Flanschverbindung 80 wird durch mit Schrauben 831 vorgespannten Bruchbolzen 83 hergestellt, die Bestandteil einer Löseeinrichtung 800 zum definierten Trennen der Kupplungshälften beim Überschreiten einer bestimmten, über die angeschlossenen Förderleitungen 9 ausgeübten Zugbeanspruchung an der Kupplungsvorrichtung 1 sind.

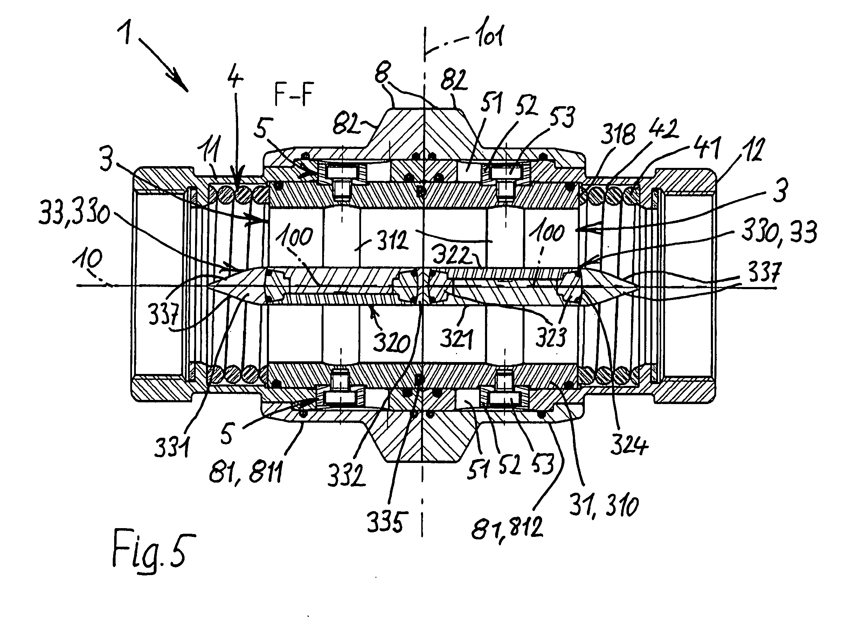

Die Ventilscheibe 320 ist Bestandteil der Strömungs-/Diagonalwand 330, und zwar derart, dass die Ventilscheibe 320, wie zur Gruppe I in Fig. 1 dargestellt, vollständig und an den Wänden glattflächig aufgenommen wird. In dieser Position ist eine eine radiale Querströmung vermeidende Durchströmung hergestellt, die durch die Strömungswand 330 in zwei mit der Kupplungsteilachse 100 parallele Halbströmungsstrecken im Durchströmungsraum 20 aufgeteilt ist. Hingegen ist die Durchströmung in jedem Durchströmungsraum 20 gesperrt, wenn, wie in Fig. 2 zur Gruppe I dargestellt, die Ventilscheibe 320 aus in der Strömungswand 330 versenkter Flachposition um 90° um eine Drehlagerachse 60 einer Drehlagerung 6 verschwenkt ist. Die Ventilscheibe 320 befindet sich dann in einem in Fig. 5 dargestellten Ventilsitz 312 an der Ventilaufnahme 31.

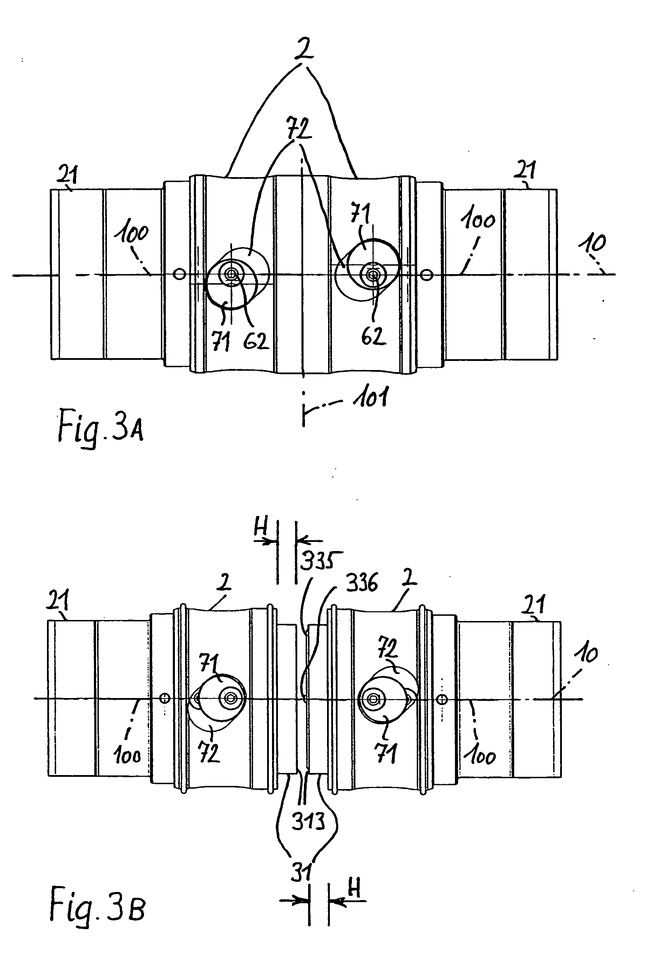

Aufbau und Funktion der Kupplungsvorrichtung 1 gemäß Fig. 1 und 2 gehen weiter im Einzelnen aus den Darstellungen in Fig. 3 bis 6 hervor. Die Baugruppen I und II umfassen Bauteile der Ventileinrichtungen 3. Bei geöffneter Ventileinrichtung 3 taucht die Ventilscheibe 320 in der zuvor beschriebenen Weise in die Strömungs-/Diagonalwand 330 ein. Die Strömungswand bildet also einen Ventilhalter 33 mit einer Halteröffnung 333, in die die Ventilscheibe 320 randseitig formgleich einfasst, wie dies insbesondere aus Fig. 5 ersichtlich ist. Der Rand 324 der Ventilscheibe 320 ist als Dichtrand ausgebildet. Er ist ballig mit sphärischer Krümmung ausgebildet. Im Ausführungsbeispiel ist der Ventilscheibenrand 324 durch einen zum Beispiel aus Stahl gefertigten Ventilring 323 gebildet, in den dichtseitig elastische Ringdichtungen eingelassen sind. Die Ventilscheibe 320 ist in Schraubverbindung aus einem kreisförmigen Scheibenelement 321 sowie einem schmaleren kreisförmigen Deckelelement 322 zusammengefügt. Zwischen diesen Elementen sitzt der Dichtventilring 323.

Der bereits erwähnte Ventilsitz 312 wird durch eine Sitznut gebildet, deren Dichtfläche zur Fläche des Dichtrandes des Ventilrings 323 komplementär ist. Die geschlossene Ventileinrichtung 3 ist insbesondere in Fig. 6A, 6B dargestellt. In der Ventilschließposition fasst der sphärische Ventilscheibenrand 324 gleichermaßen wie in der Ventilöffnungsposition sphärisch anliegend in die Gegenflächen ein. Dadurch sind radial wirkende Abdichtungen hergestellt. Von besonderer Bedeutung ist dabei, dass in der Ventilschließposition in der Sitznut des Ventilsitzes 312 eine Radialabdichtung hergestellt ist, die im Wesentlichen durch die geometrische Dimensionierung der Dichtflächen bestimmt und weitgehend von zur Kupplungsteilachse 100 parallelen Axialkräften befreit oder entlastet ist. Leckage wird in besonderem Maß vermieden. Eine axial wirkende Flächendichtung mit für diese erforderlicher Axialkraft entfällt.

Wie insbesondere aus Fig. 4A, 5 ersichtlich, ist die Strömungs-/Diagonalwand 330 im Ausführungsbeispiel aus zwei flachen Halterstücken 331, 332 zusammengefügt. Das Halterstück 331 ist mit schmalem freiem Strömungsrand 337 dem Leitungsanschlusselement 21 zugewandt. Es ist mit einem radial etwas zurückspringenden Abschnitt ausgebildet, der aus der durch das Rohrstück 310 gebildeten Ventilaufnahme 31 axial hervorragt. Dadurch sind zwischen dem Kupplungsgehäuse 2 und diesem Wandabschnitt achsparallel flache Durchgänge 42 gebildet, die die Schraubenfeder 41 durchgreift. Das Flachstück 331 ist mittels Schraubverbindung an der Ventilaufnahme 31 befestigt.

Zum Ausbilden der Druckkrafteinrichtung 4 ist die Druckkraft-/Schraubenfeder 41 gegen einen Radialsteg 22 axial abgestützt, der an der Innenwand 23 des Gehäuses 2 an der im Gehäuse 2 inneren Seite des Anschlusselements 21 ausgebildet ist. Wie aus Fig. 4A ersichtlich, wird die Druckschraubenfeder 41 in der gekuppelten Kupplungsvorrichtung 1 bei geöffneter Ventileinrichtung 3 in den Durchgängen 42 zwischen dem leitungsseitigen Rand 318 des Rohrstückes 310 und dem Radialsteg 22 mit ihren Windungen axial zusammengepresst. Die Länge des Rohrstücks 310 ist so bemessen, dass die Schraubenfeder in dem Durchgang 42 praktisch vollständig zusammengepresst ist, wenn die Kupplungsränder 313 und die damit in Axialrichtung positionsgleichen Stoßränder 334 der Strömungswand in der Anschluss-Kupplungsebene 101 dichtend aneinander stoßen.

Die beschriebene Ausbildung der Druckkraftquelle bzw. der Druckkrafteinrichtung 4 ist ein Beispiel dafür, dass der Durchströmungsraum 20 längs der Kupplungsteilachse 100 zumindest im Wesentlichen einen einheitlichen Strömungskreisquerschnitt aufweist, der durch den inneren Kreisquerschnitt des Kupplungsgehäuses 2 und den inneren Kreisquerschnitt der Schraubenfeder 41 bestimmt ist. Dieser Durchströmungsquerschnitt ist im Wesentlichen gleich dem Durchströmungsquerschnitt der Förderleitung 9.

An der der Kupplungsöffnung 13 zugewandten Seite ist die Strömungs-/Diagonalwand 330 durch ein zweites halbmondförmiges flaches Wandstück 332 gebildet. Dieses ist im Ausführungsbeispiel mit Kugel- und Madenschraube 314, 315 an dem Rohrstück 310 befestigt.

Wie schon beschrieben, ist die durch das Rohrstück 310 gebildete Ventilaufnahme 31 in Axialrichtung der Kupplungsvorrichtung 1 versetzbar angeordnet und gelagert, wobei der Kupplungsrand 313 der Ventilaufnahme 31 bei entkuppelter Kupplungsvorrichtung 1 um ein Anschluss-Hubmaß H (Fig. 6A) aus der Kupplungsöffnung 13 hervorsteht, während die Ränder 313 und 334 bei gekuppelter Kupplungsvorrichtung 1 mit dem Flanschrand 82 in der Kupplungsebene 101 abschließen, wenn die Ränder 313, 334 der beiden Kupplungsteile 11, 12 auf Stoß gegeneinander gesetzt sind. An dem einen Kupplungsrand 313 ist umlaufend ein Dichtring 335 eingelassen. Der Rand 334 einer Strömungs-/Diagonalwand 330 ist mit axialen Justierelementen 336 versehen.

Die Ventileinrichtung 3 ist mit einer Schiebeeinrichtung 5 ausgebildet, die die Ventilaufnahme 31 in dem Kupplungsgehäuse 2 längs der geraden Kupplungsteilachse 100 unter der in Richtung der Kupplungsöffnung 13 wirkenden Druckkraft der Druckkraftquelle 4 translatorisch bewegbar lagert. Wie aus Fig. 5 ersichtlich, sind am Außenumfang der Ventilaufnahme 31 mittels Schrauben 53, die an ihrem Umfang einander gegenüberliegen, radial abstehende Rollen 52 gelagert. Die Schiebeeinrichtung 5 umfasst weiterhin achsparallele Längsnuten 51 in der Wandung des Kupplungsgehäuses 2, die eine in Achsrichtung lineare Führungsbahn für die in sie eingreifenden Gleitrollen 52 bilden. Die Führungsnuten 51 bilden zugleich einen den Anschlusshub H der Ventilaufnahme 31 begrenzenden Queranschlag.

Die Ventileinrichtung 3, die die Ventilaufnahme 31, die damit feste Strömungs-/- Diagonalwand 330 und das drehbare Ventilelement 32 umfasst, ist eine Einheit, die mit der Schiebeeinrichtung 5 translatorisch um den Anschlusshub H in Axialrichtung verschiebbar ist. Zudem ist eine Koppel- oder Getriebeeinrichtung vorgesehen, mittels der das Ventilelement 32 um die Drehlagerachse 60 der Drehlagerung 6 präzise mit einem Schwenkwinkel von 90° drehbar ist. Die Kopplungs-/- Getriebeeinrichtung ist im Ausführungsbeispiel durch eine mechanische Zwangsführungseinrichtung 7 verwirklicht, die mit Exzenterscheiben 71 und zugehörigen Exzenterführungsnuten 72 ausgestattet ist.

Wie aus Fig. 1 und 2 ersichtlich und in den Fig. 4A, 6A näher dargestellt, ist die Ventilscheibe 320 drehfest mit Pol-Achszapfen 61 ausgestattet, die die Drehlagerachse 60 bestimmen. Die Achszapfen 61 fassen mit den Schrauben 62 durch Ausnehmungen zwischen den Wandstücken 331, 332 sowie in dem Rohrstück 310 hindurch. Die Drehlagerachse 60 schneidet in mittiger Anordnung die Kupplungsachsen 10, 100 senkrecht. Die Exzenterscheiben 71 sind mittels Schrauben 62 an die Zapfen 61 angesetzt. Die Exzenterscheiben 71 sind in den Exzenternuten 72 gelagert und geführt, die in der Gehäusewand des Kupplungsgehäuses 2 ausgebildet sind. Diese Exzenterführung ist im Einzelnen in Fig. 3A (Ventilelement 32 in der Öffnungsposition) und Fig. 3B (Ventilelement 32 in der Schließposition) dargestellt. Die Exzenternuten 72 sind als schräg zur Kupplungsteilachse 100 liegende Langlöcher in der Wandung des Kupplungsgehäuses 2 derart ausgebildet, dass sie die Drehlagerachse 60 in der Linie der Achse 100 halten und die kreisförmige Exzenterscheibe 71 längs des Hubmaßversatzes um 90° um die Drehlagerachse 60 drehen. Es wird erreicht, dass die translatorische Bewegung der Ventilaufnahme 31 mit relativ geringem Hubmaß H in die rotatorische Bewegung des Ventilelements 32 zum Schließen/Öffnen umgesetzt wird. Wenngleich eine solche Exzentersteuerung besonders vorteilhaft ist, ist es auch denkbar, dass ein anderes Getriebe zum Beispiel mit Zahnelementen vorgesehen wird, um die Bewegungsumsetzung an und in der translatorischen verlagerten Ventileinrichtung durchzuführen.

Die im Ausführungsbeispiel vorgesehene Ventilscheibe 320 bildet eine Klappe, die beim Schließen der Ventileinrichtung 3 zunehmend progressiv in den Durchströmungsraum 20 einfasst. Zwar verliert die Schraubenfeder 41, die die Durchgänge 42 mit aufspreizenden Windungen durchfasst, an Antriebskraft für die Bewegungsumsetzung. Zum Einen kann dieser Schwächung durch Federn, die in der erfindungsgemäßen Anordnung sehr stark ausgelegt werden können, begegnet werden. Zum Anderen wird die Wirkung eines unter Druck stehenden Mediums im Zuge des Schließvorgangs gerade dann, wenn die Ventilscheibe 320 nahezu den Ventilsitz 312 erreicht hat, auf die Ventilscheibe 320 besonders groß. Dadurch wird der Ventilschließmechanismus bei dem selbsttätigen Öffnen der Kupplungsvorrichtung 1 besonders wirksam unterstützt und der Ablauf in der Zwangsführung begünstigt.

Wie insbesondere aus Fig. 5 ersichtlich, ist die Strömungs-/Diagonalwand 330 in Achsrichtung an ihren Rändern mit im Querschnitt spitz und flach zulaufenden Strömungsrändern und -kanten 337 geformt. Es wird ein Anströmungsprofil ausgebildet, das den Medienstrom weitgehend ohne Strömungsverlust in die beidseitig der Strömungswand 330 geführten axialen Strömungsstränge aufteilt. Die Ventilscheiben 320 liegen mit ihren Ventilringen 323 und Dichtränder in der Strömungswand 330. Damit ist erreicht, dass die Dichtelemente mit insbesondere abrassiven Medien nicht in Berührung kommen.

Zwischen dem Kupplungsgehäuse 2 und der Ventilaufnahme 31 bzw. den Anschlusshülsen 81 der Verbindungseinrichtung 8 sind radial abdichtende Dichtringe eingelegt.

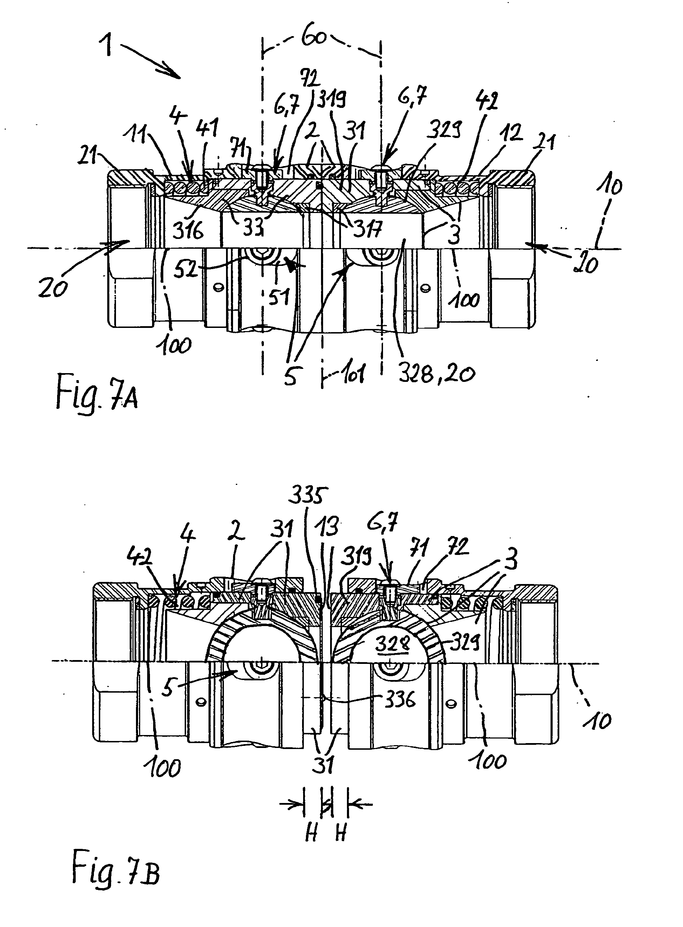

Ein anderes Ausführungsbeispiel einer erfindungsgemäßen Kupplungsvorrichtung 1 ist in Fig. 7A, 7B dargestellt. Für entsprechende Teile werden die gleichen Bezugszeichen wie zuvor verwendet. Eine die Kupplungshälften kuppelnde Verbindungseinrichtung, die mit Anschlusshülsen für eine gewünschte Verbindungsmechanik gestaltet wird, ist nicht dargestellt.

Eine Ventileinrichtung 3 ist mit einem Ventilelement 31 ausgestattet, das durch eine Ventilkugel 329 gebildet ist. Eine solche Ventilkugel 329 weist eine axiale Durchströmungsbohrung 328 auf. Durch 90°-Drehung der Ventilkugeln 329 der beiden Kupplungsteile 11, 12 wird zum einen die Durchströmungsverbindung längs der Kupplungsachsen 10, 100 hergestellt und zum anderen der Durchgang durch den Strömungsraum 20 zwischen den Leitungsanschlusselementen 21 und der Kupplungsöffnung 13 gesperrt.

Die Ventilkugel 329 ist in einer angepassten Ventilaufnahme 31 sphärisch gelagert. Diese Ventilaufnahme 31 ist durch einen rohrförmigen Einsatz 319 gebildet, der axial schiebebewegbar in dem Kupplungsgehäuse 2 sitzt. An die Innenseite des Einsatzes 319 ist zur Seite des Leitungsanschlusselements 21 hin ein Lagerstück 316 angefügt, das zusammen mit einer Ausformung an der Ventilaufnahme 31 den Ventilhalter 33 bildet. Im Bereich der Kupplungsöffnung 13 ist an die Innenseite des Einsatzes 319 ein an der Ventilkugel 329 anliegendes Dichtungsstück 317 angefügt. Es ist eine sphärisch dichtende Lager- und Sitzaufnahme für die Ventilkugel 329 gebildet, die radial und axial dichtet.

Das dem Leitungsanschlusselement 21 zugewandte Lagerstück 316 bildet durch radialen Rücksprung die Durchgänge 42 für die Schraubenfeder 41 aus.

Die Ventilkugel 329 ist mit den Pol-Achszapfen 61 versehen, die die Drehlagerung 6 mit der Drehlagerachse 60 bilden. Die Zwangsführungseinrichtung 7 weist die Exzenterscheiben 71 an den Zapfenenden auf, die in die Nuten 72 im Kupplungsgehäuse 2 einfassen.

Anordnung, Ausbildung und Funktion der Druckkrafteinrichtung 4, der Schiebeeinrichtung 5, der Drehlagerung 6 und der Zwangsführungseinrichtung 7 sind so wie bei dem Ausführungsbeispiel für die zuvor beschriebene Ventileinrichtung mit drehbarer Ventilscheibe vorgesehen.

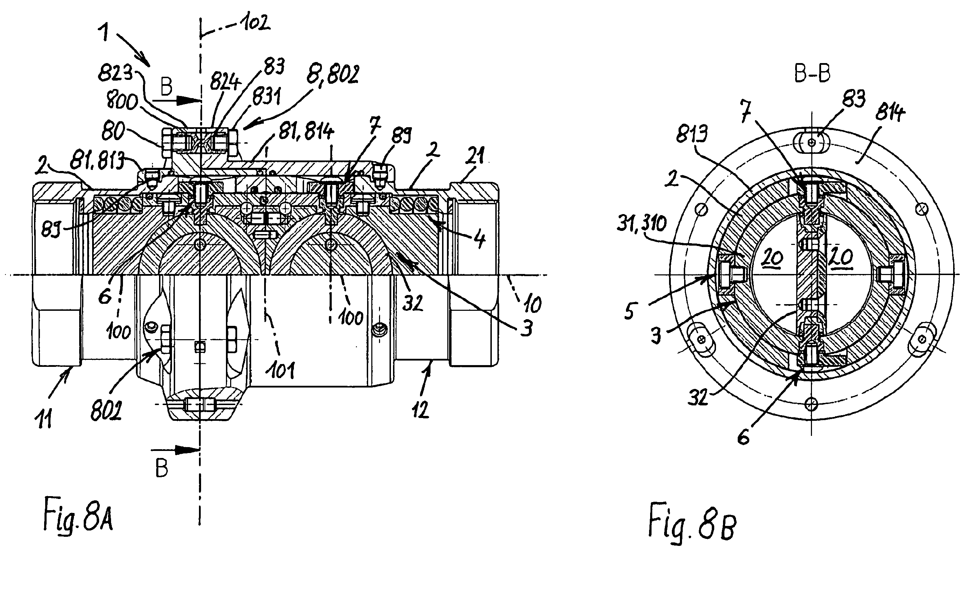

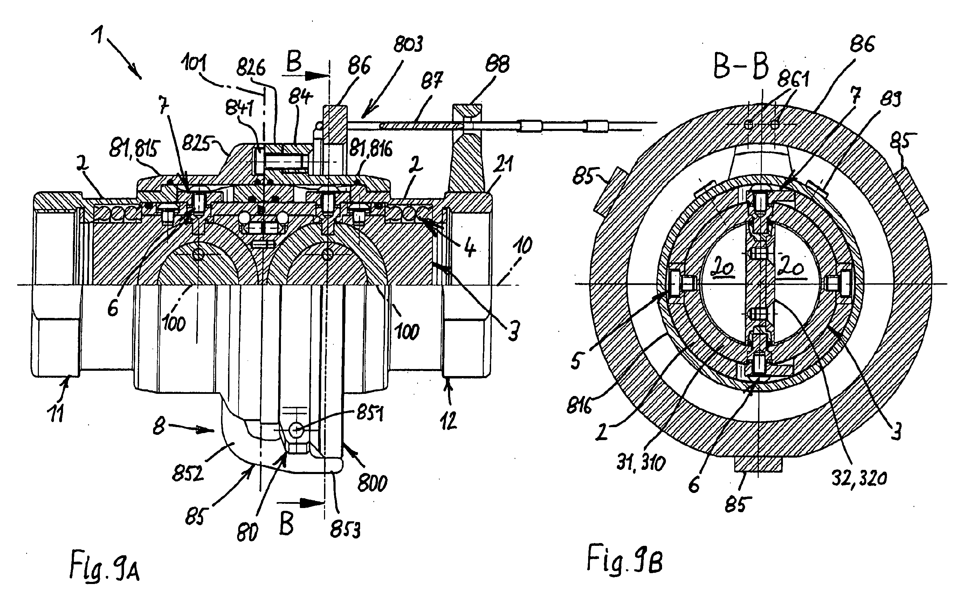

Die in Fig. 8A, 8B und 9A, 9B dargestellten Kupplungsvorrichtungen 1 unterscheiden sich von der Kupplungsvorrichtung 1 gemäß Fig. 1 bis 6B durch die Ausbildung der Anschlusshülsen 81 und durch die damit gebildeten Verbindungseinrichtungen 8. Im Folgenden werden daher nur die Besonderheiten der in den Ausführungsbeispielen dargestellten Verbindungseinrichtungen 8 beschrieben.

Zunächst wird aber hervorgehoben, dass den Kupplungsvorrichtungen 1 gemäß sämtlichen Ausführungsbeispielen gemeinsam ist, dass das rohrförmige Kupplungsgehäuse 2 jedes Kupplungsteils 11, 12 in der zugeordneten, an dem Kupplungsgehäuse 2 befestigten Anschlusshülse 81 sitzt. Die Anschlusshülsen 81 sind an ihren der Anschlusskupplungsebene 101 abgewandten Enden in Schraubverbindung mit Schrauben 89 an dem Kupplungsgehäuse 2 befestigt. Bei jedem Ausführungsbeispiel bilden die Nuten 51, 72 in dem Kupplungsgehäuse 2 Ausnehmungen, die am Außenumfang des Gehäuses 2 freiliegen. Das Kupplungsgehäuse 2 bleibt frei von radial hervorstehenden Anschluss- oder Flanschteilen. Es sitzt mit passgenauem Radialmaß in der zugeordneten Anschlusshülse 81. Zwischen diese und dem Kupplungsgehäuse 2 sind statische Dichtungen in Form von Dichtringen eingebracht. Man erkennt, dass die Anschlusshülse 81 einen das Kupplungsgehäuse 2 im Bereich der Nuten 51, 72 überdeckenden, nach Außen abdichtenden Mantelkörper bildet. Die Anschlusshülsen 81 bilden nicht nur die Mantelkörper, sondern sie sind erfindungsgemäß auch Bauteile der Verbindungseinrichtung 8. Sie bilden daher Grund- und Modulelemente der Verbindungseinrichtung 8 und lassen sich für die Funktion und Bauweise unterschiedlicher Verbindungseinrichtungen 8 einfach gestalten und auslegen. Dabei bleibt die Grundstruktur der Kupplungseinrichtung 1, nämlich die aus den zusammengefügten Kupplungsgehäusen 2 gebildete Einheit unverändert. Unterschiedliche Anschlusshülsen 81 werden mit einheitlichem Anschlussmaß zur Befestigung an den Kupplungsgehäusen 2 gefertigt. Für unterschiedliche Verbindungseinrichtungen ausgelegte Anschlusshülsen 81 können zweckmäßig in einem Bausatz angeboten und/oder bereitgehalten und als Modulbauteile zum Herstellen der gewünschten Verbindung verwendet werden.

Gemäß dem Ausführungsbeispiel der Fig. 1 bis 6B sind die Anschlusshülsen 81 als übereinstimmende Flanschhülsen 811, 812 mit den umlaufenden Flanschrändem 82 ausgebildet. In den Flanschrändern 82 sitzen, wie insbesondere aus Fig. 1 und 2 ersichtlich, die mit Schrauben 831 eingespannten Bruchbolzen 83. Die dadurch gebildete Bruchbolzenverbindung 801 umfasst das Verbindungsmittel 80 und das Lösemittel 800 der Verbindungseinrichtung 8. Bei dem Ausführungsbeispiel der Fig. 1 bis 6B ist die Bruchbolzenverbindung 801 zwischen den Anschlusshülsen 81 in der einzigen Anschlusskupplungsebene 101 ausgebildet, in der die Kupplungsgehäuse 2 mit ihren Kupplungsöffnungen 13 aneinander sitzen. Die Bruchbolzen 83 durchgreifen diese Ebene 101.

Fig. 8A, 8B zeigen in abgewandelter Ausführung eine Bruchbolzeneinrichtung 802. Anschlusshülsen 81 sind durch unterschiedliche Flanschhülsen 813, 814 gebildet.

Die an dem Kupplungsteil 11 angeordnete Flanschhülse 813 weist eine nur geringe axiale Länge auf, währen die andere an dem Kupplungsteil 12 angeordnete Flanschhülse 814 mit großer axialer Länge ausgebildet ist. Die beiden Flanschhülsen 813, 814 sind an den gleichen Anschlussstellen wie im zuvor beschriebenen Ausführungsbeispiel mit Schrauben 89 an den Kupplungsgehäusen 2 befestigt. Die Flanschhülsen 813, 814 sind so lang bemessen und ausgebildet, dass die Flanschhülse 813 in Steckverbindung in der Flanschhülse 814 sitzt. Die Flanschhülse 813 fasst soweit in die Flanschhülse 814 ein, dass sie an der Anschlusskupplungsebene 101 endet, in der die Kupplungsgehäuse 2 der beiden Kupplungsteile 11, 12 mit ihren Kupplungsöffnungen 13 aneinander sitzen. Es ist ein Schäftungssitz ausgebildet.

An einander zugewandten Rändern der Flanschhülsen 813, 814 sind den oben beschriebenen Anschluss-/Flanschrändem 82 entsprechende Flanschränder 823, 824 ausgebildet, die über den Umfang verteilt die mit Schrauben 831 einspannten Bruchbolzen 83 aufnehmen. Die Schäftungs-/Steckverbindung der Flanschhülsen 813, 814 ist so dimensioniert, dass die Flanschhülsen 813, 814 mit ihren Flanschrändem 823, 824 in einer zweiten zur Kupplungsachse 10 senkrechten Anschlusskupplungsebene 102 aneinander sitzen, wobei die Bruchbolzen 83 die zweite Anschlusskupplungsebene 102 mit ihrem Schwächungsbereich durchgreifen. Die zweite Anschlusskupplungsebene 102 fällt im Ausführungsbeispiel mit der Drehlagerachse 60 der Drehlagerung 6 des Ventilelements 32 des Kupplungsteils 11 zusammen. Wesentlich ist, dass die zweite Anschlusskupplungsebene 102 längs der Kupplungsachse 10 gegenüber der ersten Anschlusskupplungsebene 101 in Axialrichtung versetzt ist. Man erreicht damit, dass die Anschlusshülse 814 durch die Anschlussebene 101 hindurchgesetzt ist.

Die Verbindungseinrichtung 8 gemäß Fig. 8A, 8B mit der Bruchbolzeneinrichtung 802 wird insbesondere für Off-Shore-Anwendungen vorgesehen. Auf schwimmende gekuppelte Leitungen wirken Querkräfte. Diese können zum Ermüdungsbruch von Bruchbolzen führen, die wie im ersten Ausführungsbeispiel die Anschlusskupplungsebene 101 durchfassen. Mit der Anordnung in der versetzten zweiten Anschlusskupplungsebene 102 gemäß Fig. 8A, 8B wird erreicht, dass die Bruchbolzeneinrichtung 802 insbesondere im Bereich der Anschlussebene 101 erhöhte Quersteifigkeit aufweist, so dass die Verbindung durch Quer- bzw. Krümmungsbewegungen von gekuppelten, insbesondere schwimmenden Leitungen nicht geschädigt wird.

Im Ausführungsbeispiel der Fig. 9A, 9B sind Anschlusshülsen 81, die wie bei den anderen Ausführungsbeispielen in Schraubverbindung an den Kupplungsgehäusen 2 befestigt sind, mit einer Seilzugeinrichtung 803 ausgestattet, die mit einem Verbindungsmittel 80 und einem Lösemittel 800 zusammenwirkt.

Die Anschlusshülsen 81 sind unterschiedlich ausgebildet, und zwar mit einer Flanschhülse 815 an dem einen Kupplungsteil 11 und einer Flanschhülse 816 an dem anderen Kupplungsteil 12. Die Flanschhülse 815 ist mit einem umlaufenden Flanschrand 825 ausgebildet, und die Flanschhülse 816 weist einen umlaufenden Flanschrand 826 auf. Die Flanschränder 825, 826 sitzen in der mit den Kupplungsteilen 11, 12 zusammengefügten Kupplungsvorrichtung 1 unter Spannung auf Stoß aneinander. Diese Verbindung wird dadurch hergestellt, dass die Anschlusshülsen 815, 816 mittels einer das Verbindungsmittel 80 bildenden Klammereinrichtung aneinandergespannt werden. Die Klammereinrichtung umfasst drei über den Kupplungsumfang verteilt angeordnete Klammer-Hebelelemente 85. Die Hebelemente 85 sind an einem Trägerring 84 gelagert, der auf der der Kupplungsebene 101 abgewandten Seite an dem Flanschrand 826 der Flanschhülse 816 angeordnet und durch Schraubverbindung 841 befestigt ist.

Jedes Hebelelement 85 ist um eine Drehlagerachse 851 derart schwenkbar an dem Trägerring 84 gelagert, dass es mit einem dem Flanschrand 825 zugeordneten Hebelarm 852 in den Kupplungsteil 11 einfasst, während es mit einem kürzeren Schwenkarm 853 einen zur Kupplungsachse 10 parallel ausgerichteten Lagersteg bildet.

Die Stege der drei Hebelelemente 85 bilden einen Spannsitz für ein Auslöseelement 86 in Form eines Auszugringes. Der Auszugring weist an einer Umfangsstelle Bohrungen 861 auf, die die Schlaufe eines Seilzuges 87 befestigen, der durch ein Führungselement 88 geführt ist, das im Bereich des Leitungsanschlusselements 21 radial an dem Kupplungsteil 12 hervorsteht.

Im gespannten Zustand der Verbindungseinrichtung 8 werden die Hebelelemente 85 mittels des Auslöseelements 86 gespannt, so dass sie den Flanschrand 825 gegen den Flanschrand 826 spannen. Sobald auf den Seilzug 87 eine bestimmte Zugkraft ausgeübt wird, erfährt der das Auslöseelement 86 bildende Auszugring ein Kippmoment, so dass der Auszugring aus seiner Spannposition frei kommt und die Hebelelemente 85 aufschwenken. In der Folge geht die Klemm-/Spannverbindung der Flanschränder 825, 826 verloren und die Kupplungsvorrichtung 1 wird geöffnet.

Verbindungs- und Lösemittel 80, 800, wie sie bei dem Ausführungsbeispiel gemäß Fig. 9A, 9B vorgesehen sind, werden in dem Dokument DE-A1-10 2005 011 601 detailliert beschrieben. Dort sind Teile des Verbindungsmittels, nämlich die Flanschränder und ein Träger für die Hebelelemente an den Gehäusen der Kupplungsteile der Kupplungsvorrichtung ausgebildet. Bei der bekannten Kupplungsvorrichtung ist die Verbindungs-/Auslöseeinrichtung also fester Bestandteil der Kupplungsvorrichtung. Hier schafft die Erfindung Abhilfe. Wie anhand der Ausführungsbeispiele beschrieben, wird gemäß der Erfindung erreicht, dass ihre Kupplungsteile wahlweise durch Ansetzen angepasster Anschlusshülsen mit unterschiedlichen Verbindungs-/Auslöseeinrichtungen ausgestattet werden bzw. nutzbar sind. Dadurch erreicht man erheblich Fertigungs- und Kostenvorteile.

## Patentansprüche

1. Kupplungsvorrichtung (1) zum dichtenden Verbinden von flüssige oder gasförmige Medien transportierenden Leitungen, umfassend zwei entsprechende Kupplungsteile (11, 12) mit geraden Achsen (100), die an ihren Kupplungsöffnungen (13) mittels Verbindungseinrichtung (8) in gerader Kupplungsachse (10) aneinanderfügbar sind und jeweils ein einen Durchströmungsraum (20) umgebendes Kupplungsgehäuse (2) mit Leitungsanschlusselement (21) sowie eine Ventilelement (32) und zugehörige Ventilaufnahme (31) aufweisende Ventileinrichtung (3) zum Sperren und Freigeben des Medienflusses durch den Durchströmungsraum (20) aufweisen, wobei
die Ventileinrichtungen (3) der beiden Kupplungsteile (11, 12) zum selbsttätigen Zusammenwirken beim Kuppeln und Entkuppeln der Kupplungsteile (11, 12) mit jeweils zwischen Kupplungsgehäuse (2) und Ventileinrichtung (3) geschalteter Druckkraftquelle (4) derart eingerichtet sind, dass die Ventileinrichtungen (3) im gekuppelten Zustand der Kupplungsteile (11, 12) geöffnet und im entkuppelten Zustand der Kupplungsteile (11, 12) geschlossen sind,
jede Ventileinrichtung (3) mit einer Schiebeeinrichtung (5) ausgebildet ist, die die zugehörige Ventilaufnahme (31) in dem Kupplungsgehäuse (2) längs der geraden Kupplungsteilachse (100) unter in Richtung der Kupplungsöffnung (13) wirkender Druckkraft der Druckkraftquelle (4) translatorisch bewegbar lagert,
das Ventilelement (32) zusammen mit der Ventilaufnahme (31) translatorisch verlagerbar und mittels einer an dem Ventilelement (32) angeordnete Axialzapfen (61) umfassenden Drehlagerung (6) derart drehbar gelagert ist, dass es zwischen einer die Ventileinrichtung (3) schließenden Schließposition und einer sie öffnenden Öffnungsposition um eine die Kupplungsteilachse (100) quer kreuzende Drehlagerachse (60) hin und her drehbar ist, und
jeder Kupplungsteil (11, 12) mit einer Zwangsführungseinrichtung (7) ausgestattet ist, die die unter Wirkung der Druckkraftquelle (4) erfolgende translatorische Bewegung der Ventilaufnahme (31) in die zwischen Schließ- und Öffnungsposition erfolgende rotatorische Bewegung des Ventilelements (32) zum Betrieb der Kupplungsvorrichtung (1) im entkuppelten bzw. gekuppelten Zustand umsetzt, **dadurch gekennzeichnet,**
**dass** die Zwangsführungseinrichtung (7) eine an der Drehlagerung (6) und dem Kupplungsgehäuse (2) ausgebildete Exzentersteuerung (71, 72) mit Exzenterscheiben (71) aufweist, mit denen die Axialzapfen des Ventilelements (32) verbunden sind.

2. Kupplungsvorrichtung nach Anspruch 1, **dadurch gekennzeichnet, dass** das Ventilelement (32) jedes Kupplungsteils (11, 12) einen sphärischen Umfangsabschnitt zum Einfassen in einen komplementären Abschnitt (312) der Ventilaufnahme (31) aufweist.

3. Kupplungsvorrichtung nach Anspruch 1 oder 2, **dadurch gekennzeichnet, dass** zwischen der Ventilaufnahme (31) und dem Ventilelement (32) ausschließlich eine radiale Abdichtung hergestellt ist.

4. Kupplungsvorrichtung nach einem der Ansprüche 1 bis 3, **dadurch gekennzeichnet, dass** der Strömungsquerschnitt des Durchströmungsraums (20) längs der Kupplungsteilachse (100) zumindest im Wesentlichen gleich dem Strömungsquerschnitt der an die Kupplungsvorrichtung (1) anschließbaren Leitungen ist.

5. Kupplungsvorrichtung nach einem der Ansprüche 1 bis 4, **dadurch gekennzeichnet, dass** der Strömungsquerschnitt des Durchströmungsraums (20) längs der Kupplungsteilachse (100) zumindest im Wesentlichen mit einem einheitlichen Strömungsquerschnitt der Ventilaufnahme (31) übereinstimmt.

6. Kupplungsvorrichtung nach einem der Ansprüche 1 bis 5, **dadurch gekennzeichnet, dass** das Ventilelement (32) als kreisförmige Ventilscheibe (320) mit konvexem, vorzugsweise sphärisch geformtem Dichtrand ausgebildet ist und dass die Ventilaufnahme (31) durch einen den Durchströmungsraum (20) wenigstens über den Großteil seiner Länge begrenzenden geraden Leitungsabschnitt (310) vorzugsweise in Form eines geraden Rohrstücks ausgebildet ist, dessen Innenwandung einen Strömungskreisquerschnitt bestimmt und einen dem Scheibendichtrand zugeordneten Ventilsitz (312) zur Ausbildung einer Radialabdichtung aufweist, wobei die Ventilscheibe (320) eine Klappe bildet, die den Strömungskreisquerschnitt in der durch die Radialabdichtung hergestellten Ventilschließposition schließt und in der Ventilöffnungsposition eine in der Kupplungsteilachse (100) ausgerichtete Position einnimmt.

7. Kupplungsvorrichtung nach Anspruch 6, **dadurch gekennzeichnet, dass** die Ventilaufnahme (31) mit einem Ventilhalter (33) ausgestattet ist, der Bestandteil einer sich in dem geraden Leitungsabschnitt (310) axial erstreckenden Diagonalwand (330) ist, die als flache, die Axialströmung durch den Durchströmungsraum (20) begünstigende Strömungswand ausgebildet ist und einen die Ventilscheibe (320) in ihrer zur Kupplungsteilachse (100) parallelen Ventilöffnungsposition aufnehmenden Halterraum (333) aufweist.

8. Kupplungsvorrichtung nach Anspruch 7, **dadurch gekennzeichnet, dass** der Halterraum (333) mit dem Ventilscheibenrand (324) angepasstem Lagerrand zur abdichtenden Aufnahme der Ventilscheibe (320) ausgebildet ist.

9. Kupplungsvorrichtung nach Anspruch 7 oder 8, **dadurch gekennzeichnet, dass** die Ventilscheibe (320) mit ihrem Ventilscheibenrand (324) vollständig in dem Halterraum (333) aufgenommen ist, wobei die Strömungswand des Ventilhalters (33) glattflächig geschlossen ist.

10. Kupplungsvorrichtung nach einem der Ansprüche 7 bis 9, **dadurch gekennzeichnet, dass** der Ventilhalter (33) an seinen freien Endrändern mit axiale Ein- und Ausströmung begünstigenden, vorzugsweise spitz zulaufenden Strömungsflächen ausgebildet ist.

11. Kupplungsvorrichtung nach einem der Ansprüche 1 bis 5, **dadurch gekennzeichnet, dass** das Ventilelement (32) als Ventilkugel (329) ausgebildet ist und dass die Ventilaufnahme (31) mit die Ventilkugel (329) lagernden Lagerflächen ausgestattet ist.

12. Kupplungsvorrichtung nach einem der Ansprüche 1 bis 11, **dadurch gekennzeichnet, dass** die Schiebeeinrichtung (5) längs der Kupplungsteilachse (100) mit einer Linearführung eingerichtet ist, die an der Ventilaufnahme (31) und dem Kupplungsgehäuse (2) ausgebildet ist.

13. Kupplungsvorrichtung nach einem der Ansprüche 1 bis 12, **dadurch gekennzeichnet, dass** die Druckkraftquelle (4) durch eine Druckfeder (41) gebildet ist, die an dem zum Leitungsanschluss ausgebildeten Ende des Kupplungsteils (11, 12) an dem Kupplungsgehäuse (2) gelagert und zwischen diesem und der verlagerbaren Ventilaufnahme (31) in mit der Kupplungsteilachse (100) koaxialer Anordnung eingerichtet ist.

14. Kupplungsvorrichtung nach einem der Ansprüche 1 bis 13, **dadurch gekennzeichnet, dass** die Kupplungsvorrichtung (1) als Sicherheitstrennkupplung mit einer Verbindungseinrichtung (8) ausgebildet ist, die eine Kupplungslöseeinrichtung aufweist, die mit einem Lösemittel (800) ausgestattet ist, das bei vorgegebener Beanspruchung der Kupplungsvorrichtung (1) die Verbindungseinrichtung (8) zum Trennen der Kupplungsteile (11, 12) selbsttätig öffnet.

15. Kupplungsvorrichtung nach Anspruch 14, **dadurch gekennzeichnet, dass** die Verbindungseinrichtung (8) Anschlusshülsen (81; 811, 812; 813, 814; 815, 816) aufweist, die jeweils einem der beiden Kupplungsteile (11, 12) zugeordnet sind, wobei das Kupplungsgehäuse (2) jedes Kupplungsteils (11, 12) in der zugeordneten, an dem Kupplungsgehäuse (2) befestigten Anschlusshülse (81) sitzt, wobei die Anschlusshülsen (81) mit Anschlussrändern (82; 823, 824; 825, 826) ausgebildet sind, die mit einem Verbindungsmittel (80) aneinander geschlossen sind, das durch das Lösemittel (800) geöffnet wird, und wobei die Anschlusshülsen (81) zum Zusammenwirken mit dem Verbindungsmittel (80) und dem Lösemittel (800) eingerichtet sind.

16. Kupplungsvorrichtung nach Anspruch 15, **dadurch gekennzeichnet, dass** die Anschlusshülsen (81) mit einer das Verbindungsmittel (80) und das Lösemittel (800) ausbildenden Bruchbolzenverbindung (801, 802) ausgestattet sind.

17. Kupplungsvorrichtung nach Anspruch 16, **dadurch gekennzeichnet, dass** zwischen den Anschlusshülsen (81) eine einzige Anschluss-Kupplungsebene (101) ausgebildet ist, in der die Kupplungsgehäuse (2) der beiden Kupplungsteile (11, 12) mit ihren Kupplungsöffnungen (13) aneinander sitzen und die von Elementen (83) der Bruchbolzenverbindung (801) durchgriffen wird.

18. Kupplungsvorrichtung nach Anspruch 16, **dadurch gekennzeichnet, dass** zwischen den Anschlusshülsen (81) zwei längs der Kupplungsachse (10) versetzt angeordnete Anschluss-Kupplungsebenen (101, 102) ausgebildet sind, wobei in der einen Anschluss-Kupplungsebene (101) die Kupplungsgehäuse (2) der beiden Kupplungsteile (11, 12) mit ihren Kupplungsöffnungen (13) aneinander sitzen und wobei die andere Anschluss-Kupplungsebene (102) von Elementen der Bruchbolzenverbindung (802) durchgriffen wird.

19. Kupplungsvorrichtung nach Anspruch 15, **dadurch gekennzeichnet, dass** die Anschlusshülsen (81) mit einer Seilzugeinrichtung ausgestattet sind, die mit dem Verbindungsmittel (80) und dem Lösemittel (800) zusammenwirkt.

20. Kupplungsvorrichtung nach Anspruch 19, **dadurch gekennzeichnet, dass** das Verbindungsmittel (80) eine die Anschlusshülsen (815, 816) der beiden Kupplungsteile (11, 12) aneinander klammernde und damit die Kupplungsgehäuse (2) an ihren Kupplungsöffnungen (13) aneinander setzende Klammereinrichtung aufweist und das Lösemittel (800) mit wenigstens einem die Klammereinrichtung in gespanntem Zustand haltenden Spannelement ausgestattet ist, das mittels des Seilzugs (87) zum Öffnen der Klammereinrichtung abtrennbar ist.

21. Kupplungsvorrichtung nach einem der Ansprüche 15 bis 20, **dadurch gekennzeichnet, dass** das Kupplungsgehäuse (2) an seinem Außenumfang freiliegende Ausnehmungen (51, 72) aufweist, in denen Elemente der Schiebeeinrichtung (5), der Drehlagerung (6) und/oder der Zwangsführungseinrichtung (7) untergebracht sind, und dass die zugeordnete Anschlusshülse (81; 811, 812; 813, 814; 815, 816) der Verbindungseinrichtung (8) einen das Kupplungsgehäuse (2) im Bereich der Ausnehmungen (51, 72) überdeckenden, nach Außen abdichtenden Mantelkörper bildet.

## Claims

1. Coupling device (1) for connecting liquid or gaseous media-transporting lines in sealing relationship, comprising two corresponding coupling parts (11, 12) having straight axes (100) which can be joined to one another at the coupling openings (13) thereof on a straight coupling axis (10) by connecting means (8), and each comprise a coupling housing (2) surrounding a flow-through space (20), said housing having a line connection member (21) and a valve element (32) and an associated valve means (3) comprising a valve socket (31) for shutting off and releasing the flow of media through the flow-through space (20), wherein
the valve means (3) of the two coupling parts (11, 12) is designed to automatically cooperate with a source (4) of compressive force each connected between the coupling housing (2) and the valve means (3) when the coupling parts (11, 12) are coupled and decoupled, in such a way that when the coupling parts (11, 12) are coupled, the valve means (3) are open, and when the coupling parts (11, 12) are decoupled, the valve means are closed,
each valve means (3) is formed with a sliding means (5) which supports the associated valve socket (31) in the coupling housing (2) translationally movably along the straight coupling part axis (100) under compressive force from the source (4) of compressive force which acts in the direction of the coupling opening (13),
the valve element (32) is translationally displaceable together with the valve socket (31) and is rotatably mounted by means of a pivot bearing (6) comprising axial pins (61) arranged on the valve element (32) in such a way that said valve member is rotatable back and forth between a closed position which closes the valve means (3) and an open position which opens said valve means about a pivot bearing axis (60) which transversely intersects the coupling part axis (100), and
each coupling part (11, 12) is provided with a forced guidance means (7) which converts the translational movement of the valve socket (31), taking place due to the source (4) of compressive force, into the rotational movement of the valve element (32) between the closed and open positions for operating the coupling device (1) when coupled and decoupled, **characterized in**
**that** the forced guidance means (7) comprises an eccentric control means (71, 72) having eccentric discs (71), said eccentric control means being formed on the pivot bearing (6) and on the coupling housing (2), and the axial pins of the valve element (32) being connected to said eccentric discs.

2. Coupling device according to claim 1, **characterized in that** the valve element (32) of each coupling part (11, 12) has a spherical circumferential portion so as to be enclosed in a complementary portion (312) of the valve socket (31).

3. Coupling device according to claim 1 or 2, **characterized in that** solely a radial seal is produced between the valve socket (31) and the valve element (32).

4. Coupling device according to any one of claims 1 to 3, **characterized in that** the flow cross-section of the flow-through space (20) along the coupling part axis (100) is at least substantially identical to the flow cross-section of the lines which can be connected to the coupling device (1).

5. Coupling device according to any one of claims 1 to 4, **characterized in that** the flow cross-section of the flow-through space (20) along the coupling part axis (100) at least substantially corresponds to a uniform flow cross-section of the valve socket (31).

6. Coupling device according to any one of claims 1 to 5, **characterized in that** the valve element (32) is formed as an annular valve disc (320) having a convex, preferably spherical sealing edge, and **in that** the valve socket (31) is formed, by a straight line portion (310) which delimits the flow-through space (20) at least over the majority of the length thereof, preferably as a straight length of pipe, the inner wall of which defines an annular flow cross-section and comprises a valve seat (312) associated with the disc sealing edge for forming a radial seal, wherein the valve disc (320) forms a flap which closes the annular flow cross-section in the closed valve position produced by the radial seal and adopts a position orientated on the coupling part axis (100) in the open valve position.

7. Coupling device according to claim 6, **characterized in that** the valve socket (31) is provided with a valve holder (33) which is a component of a diagonal wall (330) extending axially in the straight line section (310), which diagonal wall is formed as a planar flow wall promoting the axial flow through the flow-through space (20), and comprises a holding space (333) for receiving the valve disc (320) in the open valve position thereof which is parallel to the coupling part axis (100).

8. Coupling device according to claim 7, **characterized in that** the holding space (333) is formed with a bearing edge adapted to the valve disc edge (324) for receiving the valve disc (320) in a sealed manner.

9. Coupling device according to either claim 7 or claim 8, **characterized in that** the valve disc (320) is fully received in the holding space (333) together with the valve disc edge thereof (324), wherein the flow wall of the valve holder (33) is closed so as to form a smooth surface.

10. Coupling device according to any one of claims 7 to 9, **characterized in that** the valve holder (33) is formed, at the free end edges thereof, having preferably pointed flow surfaces promoting inflow and outflow.

11. Coupling device according to any one of claims 1 to 5, **characterized in that** the valve element (32) is formed as a valve ball (329), and **in that** the valve socket (31) is provided with bearing surfaces which bear the valve ball (329).

12. Coupling device according to any one of claims 1 to 11, **characterized in that** the sliding means (5) is provided along the coupling part axis (100) with a linear guide which is formed on the valve socket (31) and on the coupling housing (2).

13. Coupling device according to any one of claims 1 to 12, **characterised in that** the source (4) of compressive force is a compression spring (41) which is mounted on the end of the coupling part (11, 12) on the coupling housing (2), which end forms the pipe connection, and is designed in an arrangement coaxial with the coupling part axis (100) between said coupling housing and the displaceable valve socket (31).

14. Coupling device according to any one of claims 1 to 13, **characterized in that** the coupling device (1) is formed as a safety separation coupling having a connecting means (8) comprising a coupling release means which is provided with a release means (800) which, at a predetermined load of the coupling device (1), automatically opens the connecting means (8) to separate the coupling parts (11, 12).

15. Coupling device according to claim 14, **characterized in that** the connecting means (8) comprises connecting bushings (81; 811, 812; 813, 814; 815, 816) which are associated with one of the two coupling parts (11, 12), respectively, wherein the coupling housing (2) of each coupling part (11, 12) is located in the associated connecting bushing (81) which is fixed to the coupling housing (2), the connecting bushings (81) being formed with connecting edges (82; 823, 824; 825, 826) which are closed by a connecting means (80) which is opened by the release means (800), and the connecting bushings (81) being provided to cooperate with the connecting means (80) and the release means (800).

16. Coupling device according to claim 15, **characterized in that** the connecting bushings (81) are provided with a breaking pin connection (801, 802) forming the connecting means (80) and the release means (800).

17. Coupling device according to claim 16, **characterized in that** a single connecting-coupling plane (101) is formed between the connecting bushings (81), in which plane the coupling housings (2) of the two coupling parts (11, 12) together with the coupling openings (13) thereof are located on top of one another and are penetrated by elements (83) of the breaking pin connection (801).

18. Coupling device according to claim 16, **characterized in that** two connecting-coupling planes (101, 102), arranged so as to be offset along the coupling axis (10), are formed between the connecting bushings (81), wherein in one connecting-coupling plane (101) the coupling housing (2) of the two coupling parts (11, 12) together with the coupling openings (13) thereof are located on top of one another, and the other connecting-coupling plane (102) is penetrated by members of the breaking pin connection (802).

19. Coupling device according to claim 15, **characterized in that** the connecting bushings (81) are provided with a cable pull means which cooperates with the connecting means (80) and the release means (800).

20. Coupling device according to claim 19, **characterized in that** the connecting means (80) comprises a clamping means which clamps the connecting bushings (815, 816) of the two coupling parts (11, 12) to one another and thus places the coupling housings (2) against one another at the coupling openings (13) thereof, and the release means (800) is provided with at least one tensioning member, which holds the clamping means in a tensioned state and is detachable by means of the cable pull (87) for opening the clamping means.

21. Coupling device according to any one of claims 15 to 20, **characterized in that** the coupling housing (2) comprises exposed recesses (51, 72) on the outer circumference thereof, in which members of the disc means (5), of the pivot bearing (6) and/or of the forced guidance means (7) are housed, and **in that** the associated connecting bushing (81; 811, 812; 813, 814; 815, 816) of the connecting means (8) forms a casing body which covers the coupling housing (2) in the region of the recesses (51, 72) and seals said housing to the outside.

## Revendications

1. Dispositif de couplage (1) destiné à relier de façon étanche des conduites de transport de fluides liquides ou gazeux, ledit dispositif de couplage comportant deux pièces de couplage correspondantes (11, 12) qui ont des axes rectilignes (100), qui peuvent être assemblées au niveau de leurs ouvertures de couplage (13) dans l'axe de couplage rectiligne (10) au moyen d'un dispositif de liaison (8) et qui comportent chacune un boîtier de couplage (2), entourant un espace d'écoulement (20) et doté d'un élément de raccordement de conduite (21), ainsi qu'un dispositif de clapet (3) comportant un élément de clapet (32) et un logement de clapet associé (31) et destiné à bloquer et libérer l'écoulement de fluide à travers l'espace d'écoulement (20),
les dispositifs de clapet (3) des deux pièces de couplage (11, 12) étant destinés à coopérer automatiquement, lors du couplage et du découplage des pièces de couplage (11, 12), avec une source de force de pression (4) montée à chaque fois entre le boîtier de couplage (2) et le dispositif de clapet (3) de sorte que les dispositifs de clapet (3) sont ouverts lorsque les pièces de couplage (11, 12) sont couplées et sont fermées lorsque les pièces de couplage (11, 12) sont découplées,
chaque dispositif de clapet (3) étant conformé avec un dispositif coulissant (5) qui monte le logement de clapet associé (31) dans le boîtier de couplage (2) de façon à permettre le déplacement en translation le long de l'axe de pièce de couplage rectiligne (100) sous l'action de la force de pression exercée par la source de force de pression (4) en direction de l'ouverture de couplage (13),
l'élément de clapet (32) étant apte à se déplacer en translation conjointement avec le logement de clapet (31) et étant monté de façon à pouvoir tourner au moyen d'un palier rotatif (6) comportant des tourillons axiaux (61) disposés au niveau de l'élément de clapet (32) de sorte qu'il est apte à tourner suivant un mouvement de va-et-vient entre une position de fermeture fermant le dispositif de clapet (3) et une position d'ouverture ouvrant celui-ci autour d'un axe de palier rotatif (60) croisant transversalement l'axe de pièce de couplage (100), et
chaque pièce de couplage (11, 12) étant doté d'un dispositif de guidage forcé (7) qui transforme le mouvement de translation du logement de clapet (31), s'effectuant sous l'action de la source de force de pression (4), en le mouvement rotatif de l'élément de clapet (32), s'effectuant entre les positions de fermeture et d'ouverture, pour faire fonctionner le dispositif de couplage (1) à l'état découplé ou couplé, **caractérisé en ce que**
le dispositif de guidage forcé (7) comporte une distribution à excentrique (71, 72) conformée au niveau du palier rotatif (6) et du boîtier de couplage (2) et comportant des disques d'excentrique (71) auquel les tourillons axiaux de l'élément de clapet (32) sont reliés.

2. Dispositif de couplage selon la revendication 1, **caractérisé en ce que** l'élément de clapet (32) de chaque pièce de couplage (11, 12) comporte une portion périphérique sphérique destinée à s'enchâsser dans une portion complémentaire (312) du logement de clapet (31).

3. Dispositif de couplage selon la revendication 1 ou 2, **caractérisé en ce que** seule une étanchéité radiale est réalisée entre le logement de clapet (31) et l'élément de clapet (32).

4. Dispositif de couplage selon l'une des revendications 1 à 3, **caractérisé en ce que** la section d'écoulement de l'espace d'écoulement (20) le long de l'axe de pièce de couplage (100) est au moins sensiblement égale à la section d'écoulement des conduites pouvant se raccorder au dispositif de couplage (1).

5. Dispositif de couplage selon l'une des revendications 1 à 4, **caractérisé en ce que** la section d'écoulement de l'espace d'écoulement (20) le long de l'axe de pièce de couplage (100) coïncide au moins sensiblement avec une section d'écoulement standard du logement de clapet (31).

6. Dispositif de couplage selon l'une des revendications 1 à 5, **caractérisé en ce que** l'élément de clapet (32) est conformé en disque de clapet circulaire (320) doté d'un bord d'étanchéité convexe, de préférence de forme sphérique, et **en ce que** le logement de clapet (31) est réalisé, par une portion de conduite rectiligne (310) limitant l'espace d'écoulement (20) au moins sur la plus grande partie de sa longueur, sous la forme d'une pièce tubulaire rectiligne dont la paroi intérieure détermine une section circulaire d'écoulement et possède un siège de clapet (312) associé au bord d'étanchéité de disque et destiné à une étanchéité radiale, le disque de clapet (320) formant un volet qui ferme la section d'écoulement dans la position de fermeture de clapet réalisée par l'étanchéité radiale et prend dans la position d'ouverture de clapet une position orientée dans l'axe de pièce de couplage (100).

7. Dispositif de couplage selon la revendication 6, **caractérisé en ce que** le logement de clapet (31) est doté d'un support de clapet (33) qui fait partie d'une paroi diagonale (330) qui s'étend axialement dans la portion de conduite rectiligne (310) et qui est conformé en paroi d'écoulement plate favorisant l'écoulement axial à travers l'espace d'écoulement (20) et qui comporte un espace de support (333) recevant le disque de clapet (320) dans sa position d'ouverture de clapet parallèle à l'axe de pièce de couplage (100).

8. Dispositif de couplage selon la revendication 7, **caractérisé en ce que** l'espace de retenue (333) est conformé avec un bord de palier qui est adapté au bord de disque de clapet (324) et qui est destiné à recevoir de façon étanche le disque de clapet (320).

9. Dispositif de couplage selon la revendication 7 ou 8, **caractérisé en ce que** le disque de clapet (320) est reçu entièrement avec son bord de disque de clapet (324) dans l'espace de support (333), la paroi d'écoulement du support de clapet (33) étant fermée à surface lisse.

10. Dispositif de couplage selon l'une des revendications 7 à 9, **caractérisé en ce que** le support de clapet (33) est conformé au niveau de ses bords d'extrémité libres avec des surfaces d'écoulement, de préférence effilées, favorisant l'écoulement d'entrée et de sortie.

11. Dispositif de couplage selon l'une des revendications 1 à 5, **caractérisé en ce que** l'élément de clapet (32) est conformé en bille de clapet (329) et **en ce que** le logement de clapet (31) est doté de surfaces de palier logeant la bille de clapet (329).

12. Dispositif de couplage selon l'une des revendications 1 à 11, **caractérisé en ce que** le dispositif coulissant (5) est orienté le long de l'axe de pièce de couplage (100) avec un guidage linéaire qui est conformé au niveau du logement de clapet (31) et du boîtier de couplage (2).

13. Dispositif de couplage selon l'une des revendications 1 à 12, **caractérisé en ce que** la source de force de pression (4) est formée par un ressort de compression (41) qui est logé au niveau du boîtier de couplage (2) à l'extrémité de la pièce de couplage (11, 12), conformée pour le raccordement de conduites, et qui est disposé coaxialement à l'axe de pièce de couplage (100) entre ledit boîtier de couplage et le logement de clapet déplaçable (31).

14. Dispositif de couplage selon l'une des revendications 1 à 13, **caractérisé en ce que** le dispositif de couplage (1) est conformé en couplage de séparation de sécurité doté d'un dispositif de liaison (8) qui comporte un dispositif de détachement de couplage qui est équipé d'un moyen de détachement (800) qui ouvre le dispositif de liaison (8) pour séparer les pièces de couplage (11, 12) lorsque le dispositif de couplage (1) est soumis à une sollicitation prédéterminée.

15. Dispositif de couplage selon la revendication 14, **caractérisé en ce que** le dispositif de liaison (8) comporte des manchons de raccordement (81 ; 811, 812 ; 813, 814 ; 815, 816), le boîtier de couplage (2) de chaque pièce de couplage (11, 12) siégeant dans le manchon de raccordement (81) associé qui est fixé au boîtier de couplage (2), les manchons de raccordement (81) étant conformé avec des bords de raccordement (82 ; 823, 824 ; 825, 826) qui sont raccordés l'un de l'autre à l'aide d'un moyen de liaison (80) qui est ouvert par le moyen de détachement (800), et les manchons de raccordement (81) étant disposés de façon à coopérer avec le moyen de liaison (80) et le moyen de détachement (800).

16. Dispositif de couplage selon la revendication 15, **caractérisé en ce que** les manchons de raccordement (81) sont dotés d'une liaison à boulon cassable (801, 802) formant le moyen de liaison (80) et le moyen de détachement (800).

17. Dispositif de couplage selon la revendication 16, **caractérisé en ce que** entre les manchons de raccordement (81) est conformé en unique plan de couplage et de raccordement (101) dans lequel les boîtiers de couplage (2) des deux pièces de couplage (11, 12) siègent l'un contre l'autre au niveau de leurs ouvertures de couplage (13) et qui est traversé par des éléments (83) de la liaison à boulon cassable (801).

18. Dispositif de couplage selon la revendication 16, **caractérisé en ce que** entre les manchons de raccordement (81) sont conformées deux plans de couplage et de raccordement (101, 102) disposés de façon décalée le long de l'axe de couplage (10), les boîtiers de couplage (2) des deux pièces de couplage (11, 12) siégeant l'un contre l'autre au niveau de leurs ouvertures de couplage (13) dans l'un des plans de couplage de raccordement (101) et l'autre plan de couplage de raccordement (102) étant traversé par des éléments de la liaison à boulon cassable (802).

19. Dispositif de couplage selon la revendication 15, **caractérisé en ce que** les manchons de raccordement (81) sont dotés d'un dispositif à câble de traction qui coopère avec le moyen de liaison (80) et le moyen de détachement (800).

20. Dispositif de couplage selon la revendication 19, **caractérisé en ce que** le moyen de liaison (80) comporte un dispositif de serrage serrant les manchons de raccordement (815, 816) des deux pièces de couplage (11, 12) l'un contre l'autre et plaçant par conséquent les boîtiers de couplage (2) l'un contre l'autre au niveau de leurs ouvertures de couplage (13) et **en ce que** le moyen de détachement (800) est équipé d'au moins un élément de serrage qui maintient le dispositif de serrage à l'état serré et qui peut être séparé au moyen du câble de traction (87) pour ouvrir le dispositif de serrage.

21. Dispositif de couplage selon l'une des revendications 15 à 20, **caractérisé en ce que** le boîtier de couplage (2) comporte des évidements (51, 72) qui sont ménagés au niveau de la périphérie extérieure dudit boîtier de couplage et dans lesquels des éléments du dispositif coulissant (5), du palier rotatif (6) et/ou du dispositif de guidage forcé (7) sont insérés, et **en ce que** les manchons de raccordement (81 ; 811, 812 ; 813, 814 ; 815, 816) associés du dispositif de liaison (8) forment un corps d'enveloppe, étanche par rapport à l'extérieur, qui recouvre le boîtier de couplage (2) dans la région des évidements (51, 72).
